# EUROPEAN PATENT SPECIFICATION

(11) **EP 1 852 172 B1**
(45) Date of publication and mention of the grant of the patent: **07.01.2015**
(21) Application number: 07251836.8
(22) Date of filing: 01.05.2007
(51) Int. Cl.: B01D 53/56, B01D 53/64, C01B 13/10

(54) **Removal of contaminants with ozone**
Entfernung von Verunreinigungen mit Ozon
Retrait de contaminants avec de l'ozone

(30) Priority: 01.05.2006 US 796373 P; 10.04.2007 US 784855
(43) Date of publication of application: 07.11.2007
(73) Proprietor: Linde LLC, New Providence, NJ 07974 (US)
(72) Inventor: Suchak, Naresh, Ridgewood New Jersey 07450 (US); Jain, Ravi, Bridgewater New Jersey 08807 (US); Visconti, Kelly, Roselle New Jersey 07203 (US); Finley, Steven, Wayne New Jersey 07470 (US)
(74) Representative: Christie, Gemma Louise

(56) References cited:
- EP-A- 1 036 758
- EP-A- 1 036 759
- EP-A- 1 106 238
- EP-A- 1 332 786
- EP-A- 1 359 120
- EP-A1- 0 876 994
- US-B1- 6 649 132

## Description

### BACKGROUND OF THE INVENTION

The invention relates to a process for removing contaminants from the flue gas stream of an industrial process.

Recent federal and local environmental laws require very significant reduction of discharge of harmful gaseous substances into the atmosphere. Chief among such harmful air pollutants are nitrogen oxides (NOₓ). In response to these laws, industrial air polluters have made considerable efforts to reduce the amount of these harmful substances into the air in gaseous effluents from industrial or municipal sources. Successful efforts to reduce the concentration of NOₓ in gaseous effluents often involve reacting the NOₓ in waste gases with nitrogen-based reducing agents.

Another known method of removing NOX from gas streams involves contacting the NOX with ozone, thereby oxidizing them to higher nitrogen oxides, such as N₂O₅ and removing the higher oxides from the gas stream by means of aqueous scrubbers.

Specific details of ozone-based NOₓ oxidation processes are disclosed in U. S. Patent Nos. 5,206,002; 5,316,737; 5,985,223; and 6,197,268. In addition, EP-A-1 106 238 relates to an ozone-based NOₓ oxidation process in which oxygen is fed to an ozone generator and converted to an ozone-containing gas therein. The ozone-containing gas is concentrated in an adsorptive separator with unconverted oxygen being returned to the ozone generator. The so concentrated ozone stream is used to treat a flue gas containing oxide of nitrogen. (The preamble to claim 1 is based on EP-A-1 106 238). EP-A-1 036 758 and EP-A-1 036 759 both relate to the use of membrane separation of concentrate the product gas of an ozone generator and to recycle unconverted oxygen to the ozone generator. EP-A-1 332 786 relates to particular processes for using ozone in the treatment of flue gases containing oxides of nitrogen. The treatment gas is disclosed as containing as little as 0.5% by weight or as much as 25% by weight of ozone. EP-A-1 359120 relates to the adsorptive separation of gas from the ozone generator. The adsorption beds are regenerated by means of a pressurised purge gas which may be air or nitrogen..

Additionally, the Environmental Protection Agency has presented information showing mercury levels in the environment are at levels that are likely to lead to adverse health effects. Coal-fired utility boilers are one of the largest sources of harmful anthropogenic mercury emissions but also include the NOₓ and SOₓ emissions sources.

Oxidative air pollution abatement processes have become increasingly important due to stringent air pollution control regulations. Compared to many industrial processes, one process based on adding ozone to the flue gas is especially attractive due to its simplicity and ability to be easily integrated with existing air pollution equipment. Commercially available oxygen (as distinct from air) ozone generators convert only 10 to 12% of oxygen to ozone, thus requiring the supply of oxygen to be 8 to 10 times the ozone demand. The power consumption and capital cost rapidly increases when higher conversions are sought from the generators and so do the cooling water requirements. Therefore, ozone is often cost prohibitive in its widespread application as a pollution treatment reagent.

### SUMMARY OF THE INVENTION

According to the present invention there is provided a process for removing contaminants comprising oxides of nitrogen from a flue gas stream of an industrial process including the steps of:
a) feeding an oxygen-containing gas stream to an ozone generator, thereby generating an ozone-containing gas stream, wherein the ozone-containing gas stream contains 6% or less by weight of ozone;
b) directing said ozone-containing gas stream to a gas separation unit to separate oxygen from said ozone-containing gas stream, wherein the step of separating oxygen from said oxone-containing gas stream comprises adsorbing the ozone from the ozone-containing gas stream on an adsorbent and subjecting the adsorbent to a flow of carrier gas so as to desorb the ozone into the carrier gas and thereby form an ozone-containing carrier gas stream;
c) employing said separated oxygen to generate further ozone for the process;
d) feeding said flue gas stream from an industrial process to a flue gas reactor, and
e) feeding the ozone-containing carrier gas stream to said flue gas reactor, wherein the ozone reacts with the oxides of nitrogen in said flue gas stream to form N₂O₅, characterised in that the carrier gas stream is a clean dry air or nitrogen stream, and the ozone-containing carrier gas stream fed to the future gas reactor contains 6% or less by weight of ozone.

The process according to the invention is able to use ozone generated from oxygen at low concentration from commercially available ozone generators, but at a significantly higher flow rate than is conventional. The power employed to produce the required quantity of ozone at lower concentrations (6 wt% or less) can be 40 to 60% lower than the power required at 10 wt%. Furthermore, at lower weight concentrations, an ozone generator produces 60 to 70% more than rated capacity. However, the oxygen required to generate ozone is of course far greater.

The process according to the invention uses oxygen recycle from ozone generation to produce a larger quantity of ozone at similar or lower concentrations from commercially available ozone generation equipment. A separation unit separates ozone from oxygen and recycles oxygen back to the generator. The ozone may be adsorbed preferentially at higher pressure with the gas stream exiting the bed substantially free from ozone which is recycled back with the oxygen feed to the generator.

Preferred adsorbents include silica gel, high silica mordenites and dealuminated Y zeolite. These adsorbents do not destroy ozone during adsorption. Once the bed is saturated with ozone it is desorbed at lower pressure using the carrier The ozone-containing gas stream at much lower concentration and pressure is inherently more stable and is far more effectively dispersed in the flue gas stream. Ozone now diluted in the flue gas stream reacts with the oxides of nitrogen and other contaminants to convert them to benign compounds or to their oxidized form which are easily removed in dry, semi-dry or wet scrubbers. The reaction and scrubbing can be preferably carried out in the same vessel.

Unlike other applications of ozone such as disinfection of drinking water or waste water which prefer the ozone-containing stream to be at higher concentration for effectiveness, in the flue gas oxidation process, ozone is diluted first and then reacted with contaminants, In fact, an amount of ozone produced at lower concentration with the carrier gas has been shown to be more effective in removing NOₓ from the same amount at higher concentrations.

The oxygen-containing gas feed stream is preferably, compressed dry air.

The gas streams containing oxides of nitrogen contaminants are flue gas streams from fossil fuel fired sources, process gas streams from chemical, petroleum and petrochemical, metal, semiconductor and glass operations, and off gas streams. The term "flue gas" or "flue gas stream" used hereinbelow and in the claim covers all these different types of gases or gas streams even if they do not emanate from a flue.

The contaminants typically include (in addition to nitrogen oxides), sulfur oxides, mercury, chlorine and hydrochloric acid.

The ozone-containing gas stream entering said reactor is typically at a temperature in the range of about 4.44 to 176.67°C (40° to about 350°F).

Preferably the reactor is in the form of a duct. The reactor may be located externally of a scrubber or scrubbers. In one example the flue gas contains SOₓ and NOₓ (particularly NO and NO₂) in addition to other contaminants. The SOₓ may be pre-scrubbed from the flue gas. The pre-scrubbed flue gas may then be introduced into the reactor. Reaction of NOₓ therein with ozone forms N₂O₅. The N₂O₅ may be removed from the flue gas in a main scrubber. The pre-scrubber, reactor and main scrubber may all be incorporated in a single vessel.

Preferably the scrubbing comprises:
i) introducing a reagent liquid such as caustic soda into the flue gas carrier duct to convert the reaction products of ozone and the contaminants into dilute acids of HNO₃, H₂SO₃. and H₂SO₄;
ii) absorbing the dilute acids into liquid water, thereby converting the dilute acids to salts including nitrates, sulfites and sulfates; and
iii) discharging the flue gas stream now substantially free of contaminants from the flue gas carrier duct.

### BRIEF DESCRIPTION OF THE DRAWINGS

The process according to the invention will now be described by way of example with reference to the accompanying drawings, in which:
Figure 1 is a schematic representation of a process for generating ozone and its use in an industrial process for removing contaminants.
Figure 2 is a graph representing power consumption versus the amount of ozone produced by ozone generating equipment.
Figure 3 is a graph showing the percent removal of nitrogen oxides versus the ozone to nitrogen oxides ratios for a process according to the invention and for two known processes.
Figure 4 is a graph showing the percent removal of nitrogen oxides versus the amount of power consumed per pound of nitrogen oxides removed by a process according to the invention and by a known process (1lb = 0.454 kg; 165°F = 73.88°C).

### DETAILED DESCRIPTION OF THE INVENTION

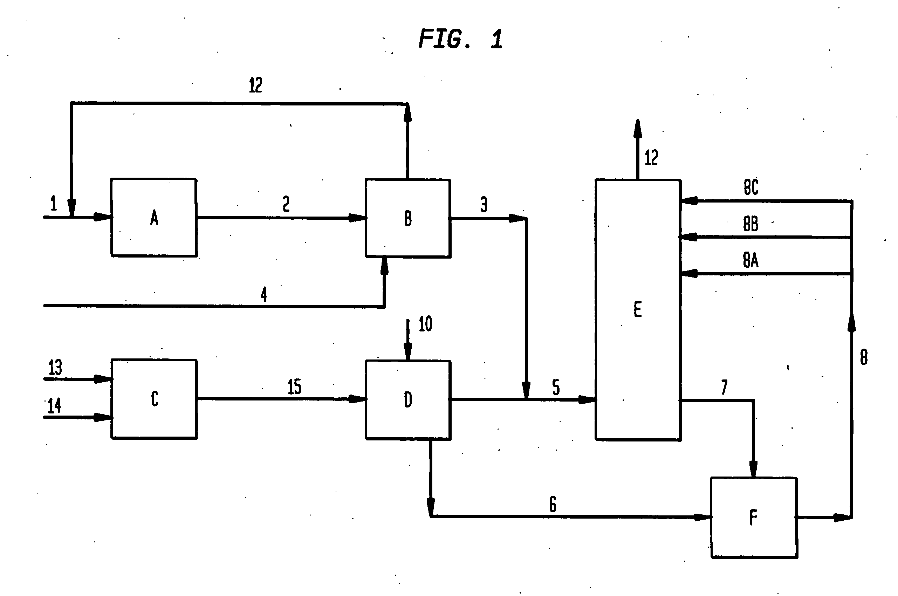

Figure 1 depicts one of the preferred configurations of the process according to the invention. The process according to the invention can treat flue gas streams from fossil fuel fired sources, process gas streams from chemical, petroleum and petrochemical, metal, semiconductor, glass or any manufacturing process that contains undesired contaminants, or off-gas streams from a variety of sources containing undesired contaminants.

Oxygen is fed through line 1 to an ozone generating device A. Ozone generators are typically commercially available and any of these ozone generators may be used in the process of the present invention. A gas stream which contains ozone and oxygen along with trace amounts of other gases exits the ozone generating device A through line 2 to an ozone separation system B. The ozone separation system is a system that separates oxygen from ozone or vice versa such that oxygen may be recycled back to the oxygen feed line 1 through line 12.

The separation unit is an adsorbent bed separator.

The adsorbent bed separator employs a bed which preferably contains an adsorbent selected from the group consisting of silica gel, high silica mordenites and dealuminated Y-type zeolites. When the adsorbent bed is saturated with ozone, it is desorbed by the introduction at lower pressure of a gas stream such as compressed dry air (CDA) which enters the separation system B through line 4.

The ozone generated by the ozone generator A and separated from oxygen leaves the ozone separation system B through line 3 as a mixture of ozone in the desorption gas. It enters line 5 which enters the scrubber assembly E.

Coal or other fossil fuel is fed to a boiler C through line 13 along with air through line 14. The boiler C is used to generate power and will combust the fossil fuel resulting in a flue gas which must be removed from the boiler. The flue gas travels from boiler C through line 15 to a selective absorber unit D or other means for removing impurities such as SO₂ or HCl. If desired solid particulates may be removed from the flue gas upstream of the absorber unit D. An electrostatic precipitator or a baghouse for dust and particulates may be used. The selective absorber unit D provides selective scrubbing for sulfur oxides such as SO₂ or for hydrogen chloride which are preferably removed prior to the flue gas stream contacting the oxidative reagent ozone. Water enters the selective absorber unit D through line 10 to effect the scrubbing. The flue gas steams may be precooled upstream of the selective absorber D, for example to below 162.78°C (325°F), by the use of indirect heat exchangers, direct quenching or evaporative cooling. The treatment of the flue gas upstream of its contact with ozone is referred to below as "conditioning".

The selective absorber unit D may consist of two or more separate units in combination to condition the flue gas before it contacts the ozone. The flue gas stream which is now conditioned leaves the selective absorber unit D through line 5 and contacts the ozone from line 3 where reaction between the contaminants still remaining in the flue gas stream and ozone occurs. The resulting gas mixture passes into the scrubber unit E. This reaction will also continue on into the scrubber unit E if so desired.

If the selective absorber unit D contains a quenching step, water from the quencher exits through line 6 to a storage vessel F for the water which also means (not shown) such as pumping means to distribute the water elsewhere in the process.

The scrubber unit E is typically a wet scrubber unit which can be a packed column, spray column, column with sieve trays or bubble trays type scrubber. Alternatively, the scrubber unit can be a dry or semi-dry type scrubber.

Water enters the scrubber unit E through lines 8A, 8B, and 8C which is pumped from storage unit F through line 8. These lines connect to nozzles which can provide a variety of water spray patterns to contact the gas stream that has been admitted into the scrubber unit. This scrubbing will remove any remaining particulate contaminants as well as those contaminants such as NOₓ that have been oxidized by the ozone. The water flow leaves the scrubber unit E through line 7 and is collected in the storage device F. The now scrubbed and clean flue gas stream exits the scrubber unit E through line 12.

Referring again to the treatment of the flue gas upstream of its contact with ozone, the primary step of preferred processes according to the invention is to condition the gas stream. The conditioning (or pre-scrubbing) step may consist of using an electrostatic precipitator (ESP) or baghouse for dust, particulate or adsorbent removal. The conditioning step may use selective scrubbing for SO₂ or HCl removal or contaminants that must not be oxidized or are preferably removed before exposing to an oxidative reagent. If the flue gas is produced at an elevated temperature the conditioning step may also be used to reduce the flue gas temperature to less than 163°C (325°F) by indirect heat exchangers or by direct quenching or by evaporative cooling. The conditioning step may use one or more unit operations to achieve one or more objectives. Once the gas is preconditioned, ozone containing carrier gas stream (CDA) is dispersed in the bulk of the gas. The preferred temperature range in which the ozone-containing gas stream is introduced into the conditioned flue gas is preferably between 5 and 177°C (40 and 350°F), lower temperatures within this range being particularly preferred.

The ozone containing gas stream is obtained from a subsystem where ozone is produced at relatively low weight concentration by flowing a large volume of oxygen through a commercially available ozone generator, then adsorbing ozone on an adsorbent such as silica gel, high silica mordenites and dealuminated Y-type zeolites and desorbing ozone with a carrier gas such as compressed dry air.

Almost all ozone in commercial use is produced by electric discharge, also called corona discharge, where lined glass or ceramic dielectric tubes are fitted inside water-cooled stainless steel tubes with an annular gap (discharge gap) between the two surfaces. Oxygen-containing gas is passed through this gap and when high voltage is applied across the gap part of the oxygen is converted to ozone.

O₂ + [O] = O₃

The conversion of oxygen into ozone [O₃] requires dissociating or breaking a very stable bond in the oxygen molecule and combining this atomic or "singlet" oxygen atom [O] with another oxygen molecule [O₂]. When high voltage is applied across a discharge gap, collisions occur between electrons and oxygen molecules. A small fraction of these electrons have sufficient kinetic energy (approximately 6 or 7 eV) to dissociate the oxygen molecule to form ozone, while the remaining electrons release their energy as heat.

O₂ + 6-7 eV (electrons) → 2 [O]

Due to corona discharge, the concentration of ozone increases along the length of the tube. The concentration of ozone exiting the tube in single pass ozone generators is likely to be around nominal design concentration. Therefore, for 10 to 12 wt% ozone as nominal concentration, there is one ozone molecule per every 10 to 15 molecules of oxygen. The singlet oxygen is a powerful oxidizing reagent as well as reducing agent. Collision of a singlet oxygen [O] with ozone [O₃] can transform ozone molecule back to an oxygen molecule. The fast moving electrons also collide with ozone destroying part of it. Here is a simplified reaction.

O₃+ [O] → 2 O₂

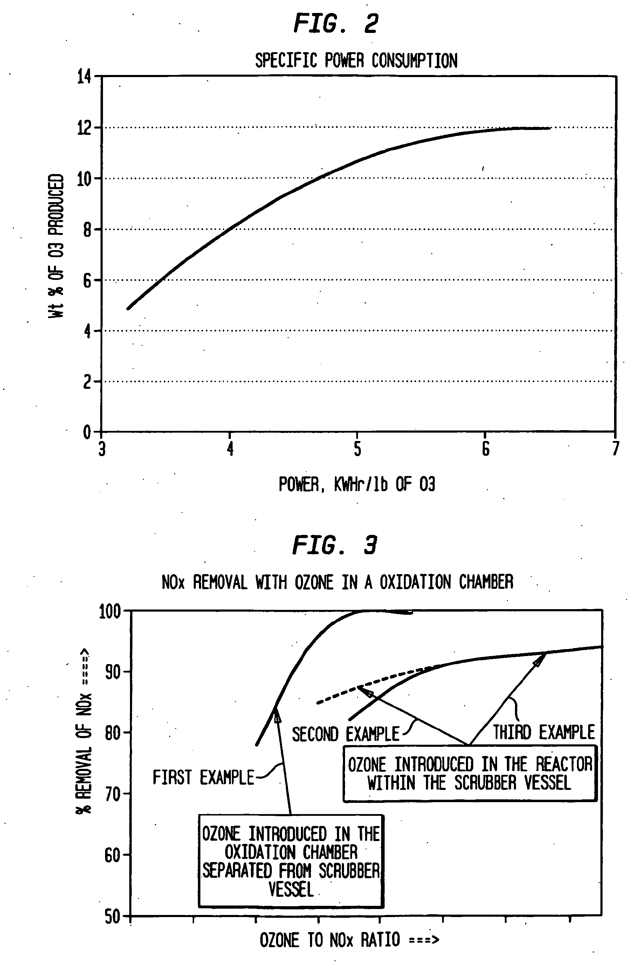

Proposed mechanisms of partial destruction of ozone within the ozone generator are very complex and not very clearly understood. However, the practical experience of operating ozone generation equipment is that specific power consumption increases with increase in concentration of ozone produced. Figure 2 represents a typical specific power consumption curve of an O₃ generator available with current state of art knowledge.

So if ozone is produced at 5 or 6 wt% in the ozone generator A instead of 10-12 wt%, there can be 40% savings in power consumption but this will require twice as much oxygen gas.

About 95% or more of commercially used ozone is in drinking water, bleaching, disinfection and waste water treatment plants. In all these applications ozone is transferred to liquid phase by gas-liquid contacting equipment The process can lose efficiency if ozone is supplied at half the concentration and twice the flow rate. In addition, the cost of oxygen nullifies the power savings. In contrast, for application of oxidizing contaminants in the flue gas, the ozone containing stream is distributed evenly in the flowing gas stream. Ozone concentration after mixing is a few hundred ppm which then reacts with contaminants. In fact, the efficiency of the process improves since the volume of the ozone containing gas stream doubles, causing better mixing with the flue gas stream.

In the improved process according to the invention, the ozone containing oxygen stream exiting the ozone generator A is fed into the separation device B which transfers ozone into the carrier gas stream and recycles most of the oxygen back to the feed stream of the ozone generator. This separation system in one embodiment consists of adsorbent beds, switching valves, buffer tanks and process controllers. Ozone adsorbs at higher pressure on the adsorbent bed during the first part of the cycle and when the beds saturated, ozone is desorbed at lower pressure and carried out of the vessel by the carrier gas such as compressed dry air.

After the desorption cycle, the bed is flushed with oxygen to drive away nitrogen on the adsorbent and the ozone adsorption cycle is repeated. The gas stream from this flushing cycle is enriched with oxygen and can be used elsewhere to realize value of the enriched air in combustion in the boiler or kiln or FCC operation in refinery or recycled back to the oxygen generator feed cycle. It is well known practice to supplement pure oxygen feed to ozone generator with a small stream of nitrogen (0.5 to 3 vol%). The small amount of nitrogen is required to be added either periodically or continuously to retain generator efficiency.

Instead of adding nitrogen, some of the gas from the flushing cycle can be recycled to the generator to save on providing a separate feed of N₂. Instead of being used as a recycle stream, the oxygen stream from separation system can be taken to another pair of ozone generator and separation system. Practically, 3 to 4 such systems can be placed in series with gradually smaller size generator, thus making use of same oxygen feed without recycling.

The purge (carrier) gas is typically compressed dry air produced either as part of the oxygen generation system, vacuum swing adsorption (VSA) or cryogenic oxygen generator, or produced in a standalone system wherein compressed air is dried using a membrane or an adsorptive system. In a cryogenic oxygen generation system waste nitrogen can also be used for purging the adsorbent beds. The preference for clean dry air or nitrogen as the purge gas is explained below.

In the flue gas oxidation application, the ozone generating area can be far away from the point of use. Therefore, it is important that ozone conveyed is stable until it reaches the point of use. The ozone can be conveyed through pipe over longer distance. Ozone decomposition depends upon the pressure, temperature, concentration and type of gas with which it is diluted.

The equation of decomposition is as follows:

O₃ + M ↔ O₂ + [O] + M

where M is the balance of gas molecules other than ozone. Published research suggests that ozone in nitrogen is more stable compared to ozone in oxygen. Also when ozone partial pressure is reduced to half, there are fewer molecules close enough in the gas phase to collide. Therefore, ozone in compressed dry air at half the partial pressure compared to ozone in O₂ at the generator pressure is far more stable. The stability of ozone is particularly important because many industrial processes where flue gas treatment is needed is in the vessels that are unprotected from the weather. Ozone containing gas streams conveyed in the pipe on the pipe racks are exposed to sunlight and summer temperatures which severely affects the stability of ozone.

The ozone containing gas steam is preferably introduced into the reaction duct through distributing headers with nozzles. The size of the nozzles depends on the gas pressure and the ozone demand. Because the ozone demand may be relatively small, in prior processes it has been necessary to adopt nozzles with particularly small outlet orifices. As a result the ozone containing gas flows out of the nozzles at a high velocity. If the ozone is carried in oxygen, the consequence is that the nozzles have typically to be made of an 'exotic' material. In the improved process according to the invention, flow of the carrier gas can be twice as much as in the conventional O₃ based oxidation process and the gas pressure is typically lower (around 1.7 bar (10 psig) compared with 2.2 to 2.7 bar (18 to 25 psig). The nozzles may therefore have larger orifices. The velocity at which this carrier gas is throttled through the orifices is less and if the carrier gas is nitrogen or CDA there is generally no need to use exotic materials for the nozzles. In addition, carrier gas with larger flow mixes more easily and uniformly in the flue gas. Larger size orifice also decreases chance of clogging with dirt and moisture in the flue gas phase.

One other consequential advantage is realized in the improved process. The actual step of introducing the ozone into the reaction duct can subject the ozone to conditions that favour its decomposition. In general, higher weight concentration, higher pressure, lower flow, higher oxygen concentration, and higher temperature all favour ozone decomposition. All five of these factors therefore work against ozone stability. The improved process according to the invention makes it possible to counters all these factors which leads to less destruction of ozone directly or indirectly.

It is desirable to ensure that the ozone mixes well with the flue gas. If the ozone containing carrier gas is not adequately mixed with the flue gas, ozone molecules do not get a chance to collide with contaminants to oxidize an incompletely mixed stream flowing through a duct or a vessel results in a higher amount of unreacted ozone and contaminants and loss of efficiency. In the case when flue gas temperature is not lowered in a gas preconditioning step, and ozone is distributed at the temperatures above 53.33°C (200°F) where mixing is not adequate, a significant amount of ozone is destroyed without oxidizing the contaminants. Good mixing of ozone with flue gas may be achieved by introducing ozone through grid openings dispersed across entire cross section of the duct. Another alternative is to introduce ozone radially into the duct.

. The flue gas preferably has a predetermined retention time in the duct and or vessel. N₂O₅ is a very temperature sensitive molecule and has low stability. However, with water or alkali or alkaline material it forms quite a stable bond. In performing the improved process according to the invention to oxidize NOₓ to N₂O₅ there is preferably a minimum of back mixing in the reaction duct or vessel.

To minimize back mixing, employing turning vanes or otherwise changing the direction of flue gas flow when it is introduced in the vessel can be employed. If desired, CFD methods can be used to design the reaction duct, including its inlets and outlet. The CFD design procedure may typically involve tracking the exit age distribution of the gas exiting the reactor. In general, such teaching may be used in preference to residence time or retention time in order to achieve the optimum design.

The reactions in the gas phase, for oxidation of NOx with ozone, are summarized as follows:.

NO + O₃ -------> NO₂ + O₂

NO₂ + O₃ -------> NO₃ +O₂

NO₃ + NO₂ <=====> N₂O₅

2 NO₂ <=====> N₂O₄

NO + NO₂ <=====> N₂O₃

2O₃ -------> 3O₂

SO₂ + O₃ -------> SO₃

CO + O₃ -------> CO₂

Other contaminants such as elemental mercury also oxidize in the oxidizer.

Hg° + O₃ ----------> Hg⁻² + O₂

The reactor can be a duct upstream of the scrubbing vessel, the scrubbing vessel itself, or a separate vessel upstream of the scrubbing vessel. It is important that most of the oxidation occurs before the flue gas is subjected to scrubbing medium. If a region of the scrubbing vessel, say its bottom section, is used as the reactor, care must be taken to minimize contacting of scrubbing medium.

The oxidation of SO₂ to SO₃ is found to be negligible in the reactor. It is the higher oxides of nitrogen, in particular, N₂O₅ that are most soluble and reactive. Therefore any contact with a scrubbing medium should be avoided until the required amount of oxidation has occurred in the gas volume.

The scrubber can be a dry or semi dry type where alkali or alkaline earth metal carbonates, bicarbonates, oxides or hydroxides are used as an adsorbent or can be a wet scrubber. The wet scrubber can employ packed columns, spray columns, columns with sieve trays, or bubble trays. Packing can be random or structured. The water for a wet scrubber is typically provided by spray nozzles that form a curtain of water of any suitable shape, for example, a flat fan, a hollow cone or a full cone. Scrubbers can have wetted walls for protection against dust and corrosion. Any scrubber, wet or dry, can be readily configured or reconfigured to scrub oxidized contaminants. The scrubber may comprise one or more scrubbing vessels. The oxidation volume can be within a single vessel where in a first volume there is a first spray or the like to precondition the gas and a second volume without spray that provides space to oxidize the contaminants.

Although a single vessel incorporating both the ozonation reactor and a downstream scrubber is generally to be preferred, care has to be taken to avoid intermixing of the scrubber liquid and the flue gas to the oxidised (or the ozone itself). Indeed known systems in which the oxidation volume is supposedly free from absorbent liquid do not achieve this objective. The simplest way to judge that is to examine an NOₓ removal vs. O₃/ NOₓ ratio graph or a graph of NOₓ removal vs. KWHr power/lb (1 lb=0.454 kg) of NOₓ removed. For inlet NOₓ between 50 to 5000 PPMV, if the slope of the curve between 70 to 90% removal is steep, the oxidation volume is free from droplets of absorbent. Assuming all inlet NOₓ is NO, the second observation is that with increase in 03/NOₓ ratio, NOₓ removal almost approaches to 100% whereas if the slope of the curve is flat between 70 to 90%, it means that ozone and NO₂ is being scrubbed in the oxidation reactor and as ozone depletes in the reactor, oxidation of NOₓ is not able to proceed further from NO₂.

Figure 3 illustrates three examples. The first is one of an oxidation chamber separate from the scrubber vessel. This example is represented by the left hand continuous line. The steep slope of this line indicates NOₓ oxidation occurred in the reactor as intended and almost all NOₓ could be converted to higher oxides which could be removed in the scrubber. The second example is a case of a vertical absorber where the lower chamber is the oxidation section and absorbent spray is introduced above the oxidation volume in a cylindrical shell and is represented by the broken line. The spray in the absorber part of the vessel is projected from the center towards the wall and the reagent absorbent flows along the wall of this cylindrical shell. It is believed that droplets do not fall into the reaction volume. However, the slope of the broken flat line indicates that, in fact, the oxidation reactions are being interfered with by absorbent droplets from the scrubbing section falling into the reaction volume. As a result, some of the ozone is scrubbed out in the reactor and increasing the ozone feed brings marginal improvement in removal efficiency. The third example is of a horizontal scrubber with two flat fan type spray nozzles. Ozone was introduced downstream of the first quenching spray nozzle but upstream of the second. The third example is represented by the right hand solid line in Figure 3. It can be inferred from the shape of the right hand solid line in Figure 3 that the reaction volume was not adequate between the two sprays and entry of water into it reduces the efficiency of the oxidation. There are not, however, many absorbent droplets between the first two sprays as the chamber is horizontal. As a result the slope is steeper than in the second example until removal of NOₓ reaches 87 to 90%, but not as steep as in the first example.

The improved process according to the invention makes possible an improvement in efficiency by reducing the power requirement by 5 to 20% or makes possible a reduced ozone consumption.

In a process according to the invention that uses a wet scrubber, while scrubbing NOₓ. SOₓ and other contaminants, oxygen from the gas that carries the ozone and from the flue gas dissolves in the scrubbing liquor and has the effect of oxidising sulfite and bisulfite that are formed therein. Although oxidation of sulfite and bisulfite with such oxygen is slower than that which would be achieved by ozone, it depletes the quantity of free sulfites and bisulfites. The improved process according to the invention makes it possible to operate with a carrier gas having a reduced concentration of oxygen, thus reducing the depletion of sulfites and bisulfites.

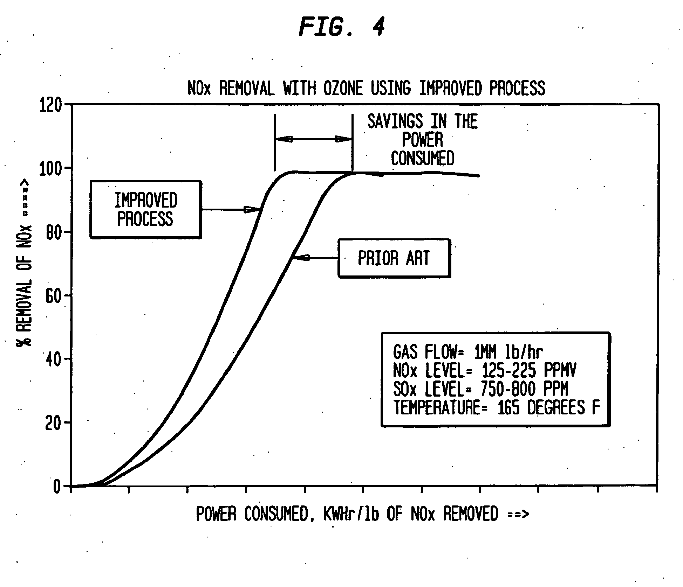

In another example, a 447,000kg/hour (1,000,000 lbs/hour) flow of flue gas containing 750 to 800 PPMv of SOₓ, and 220 PPMv of NOₓ was prescrubbed in an in-duct type of radial prescrubber which was attached to a vertical cylindrical scrubber vessel (PPMv is parts per million by volume). The prescrubbed flue gas, almost saturated at about 165°F, was mixed with an ozone stream in a carrier gas (compressed dry air) and introduced into a main scrubber vessel. The bottom cylindrical section of the scrubber vessel had a liquid sump. The flue gas stream in the bottom section was caused to turn around and travel upward towards a scrubbing section in an upper section of the scrubber. A flow diverter baffle helped to reduce back mixing and a substantial amount of NOₓ was oxidized in the bottom section. The oxidized gas was contacted with a scrubbing solution containing alkali hydroxide, carbonate, bicarbonate, sulfite and bisulfite in the scrubbing section. The walls of the scrubber were washed with the scrubbing liquor to reduce corrosion and built up of particulates. The treated gas stream exiting the scrubber contained less than 10 PPMv of NOₓ. Figure 4 compares the power consumption per unit weight of NOₓ in this example of the process according to the invention with a typical prior process CFD analysis in flow design of the oxidizing section and power savings due to improvements described in the improved process.

## Claims

1. A process for removing contaminants comprising oxide of nitrogen (NOx) from a flue gas stream of an industrial process including the steps of:
a) feeding an oxygen-containing gas stream to an ozone generator, thereby generating an ozone-containing gas stream wherein the ozone-containing gas stream contains 6% or less by weight of ozone;
b) directing said ozone-containing gas stream to a gas separation unit to separate oxygen from said ozone-containing gas stream, wherein the step of separating oxygen from said ozone-containing gas stream comprises adsorbing the ozone from the ozone-containing gas stream on an adsorbent and subjecting the adsorbent to a flow of carrier gas so as to desorb the ozone into the carrier gas and thereby form an ozone-containing carrier gas stream;
c) employing said separated oxygen to generate further ozone, for the process;
d) feeding said flue gas stream from an industrial process to a flue gas reactor; and
e) feeding the ozone-containing carrier gas stream to said flue gas reactor, wherein the ozone reacts with the oxides of nitrogen in said flue gas stream to form N₂O₅ **characterised in that** the carrier gas stream is a clean dry air or nitrogen stream, and the ozone-containing carrier gas stream fed to the flue gas reactor contains 6% or less by weight of ozone.

2. A process according to claim 1, wherein the feed oxygen-containing gas is air or oxygen.

3. A process as according to claim 2, wherein the feed air is compressed dry air.

4. A process according to any one of the preceding claims, wherein the adsorbent is selected from the group consisting of silica gel, dealuminated Y-type zeolite and high silica mordenites.

5. A process according to any one of the preceding claims in which the flue gas is reduced in temperature to 163°C (325°F) or less upstream of the flue gas reactor.

6. A process according to any one of the preceding claims in which the N₂O₅ is removed from the flue gas by scrubbing.

7. A process according to claim 6, in which flue gas reactor has a location within a scrubber operated to remove N₂O₅ from the flue gas.

8. A process according to any one of the preceding claims, further comprising the steps of:
(f) introducing a reagent liquid into said flue gas reactor to convert the reaction products of ozone and said contaminants into dilute acids;
(g) adsorbing said dilute acids into liquid water, thereby converting said dilute acids to salts; and
(h) discharging said flue gas stream now substantially free of contaminants from said flue gas reactor.

9. A process according to claim 8, wherein said liquid reagent is caustic soda, carbonates, bicarbonates, or hydroxides of calcium, magnesium, potassium or ammonia.

10. A process according to claim 8 or claim 9, wherein said dilute acids are selected from the group consisting of HNO₃, H₂SO₃, and H₂SO₄.

11. A process according to any one of claims 8 to 10, wherein said salts are selected from the group consisting of nitrates, sulfites and sulfates.

12. A process according to any one of the preceding claims, wherein said ozone is introduced uniformly in the entire cross section of the gas reactor by a grid, or is introduced radially.

13. A process according to any one of the preceding claims, wherein the flue gas reactor is in the form of a duct.

## Patentansprüche

1. Verfahren zum Entfernen von Verunreinigungen, umfassend Stickoxid (NOx) aus einer Rauchgasströmung eines Industrieverfahrens, wobei das Verfahren die folgenden Schritte umfasst:
a) Einleiten einer sauerstoffhaltigen Gasströmung in einen Ozongenerator, dadurch Erzeugen einer ozonhaltigen Gasströmung, wobei die ozonhaltige Gasströmung 6 oder weniger Gew.-% Ozon enthält;
b) Leiten der ozonhaltigen Gasströmung zu einer Gasabscheidungseinheit zum Abscheiden von Sauerstoff aus der ozonhaltigen Gasströmung, wobei der Schritt des Abscheidens der ozonhaltigen Gasströmung das Adsorbieren von Ozon aus der ozonhaltigen Gasströmung auf einem Adsorptionsmittel und das Aussetzen des Adsorptionsmittels einer Strömung eines Trägergases umfasst, um das Ozon in das Trägergas zu desorbieren und so eine ozonhaltige Trägergasströmung zu bilden;
c) Einsetzen des abgeschiedenen Sauerstoffs zum Erzeugen von weiterem Ozon für das Verfahren;
d) Einleiten der Rauchgasströmung aus einem Industrieverfahren in einen Rauchgasreaktor; und
e) Einleiten der ozonhaltigen Trägergasströmung in den Rauchgasreaktor, wobei das Ozon mit den Stickoxiden in der Rauchgasströmung reagiert, um N₂O₅ zu bilden, **dadurch gekennzeichnet, dass** die Trägergasströmung eine Strömung aus reiner Trockenluft oder Stickstoff ist, und dass die ozonhaltige Trägergasströmung, die in den Rauchgasreaktor eingeleitet wird, 6 oder weniger Gew.-% Ozon enthält.

2. Verfahren nach Anspruch 1, wobei das eingeleitete sauerstoffhaltige Gase Luft oder Sauerstoff ist.

3. Verfahren nach Anspruch 2, wobei die eingeleitete Luft unter Druck gesetzte Trockenluft ist.

4. Verfahren nach einem der vorherigen Ansprüche, wobei das Adsorptionsmittel ausgewählt ist aus der Gruppe, bestehend aus Kieselgel, entaluminisiertem Y-Zeolith und stark silciumoxidhaltigen Mordeniten.

5. Verfahren nach einem der vorherigen Ansprüche, wobei die Temperatur des Rauchgases auf 163 °C (325 °F) oder weniger stromaufwärts des Rauchgasreaktors verringert wird.

6. Verfahren nach einem der vorherigen Ansprüche, wobei N₂O₅ durch Waschen aus dem Rauchgas entfernt wird.

7. Verfahren nach Anspruch 6, wobei der Rauchgasreaktor einen Standort innerhalb eines Wäschers aufweist, der zum Entfernen von N₂O₅ aus dem Rauchgas betrieben wird.

8. Verfahren nach einem der vorherigen Ansprüche, ferner umfassend die folgenden Schritte:
(f) Einführen einer Reagenzflüssigkeit in den Rauchgasreaktor zum Umwandeln der Reaktionsprodukte von Ozon und der Verunreinigungen in Dünnsäuren;
(g) Adsorbieren der Dünnsäuren in flüssiges Wasser, und dadurch Umwandeln der Dünnsäuren in Salze; und
(h) Ablassen der Rauchgasströmung, die nun im Wesentlichen frei von Verunreinigungen ist, aus dem Rauchgasreaktor.

9. Verfahren nach Anspruch 8, wobei das flüssige Reagenz Natriumhydroxid, Carbonat, Bicarbonat oder Oxide von Calcium, Magnesium, Kalium und Ammoniak ist.

10. Verfahren nach Anspruch 8 oder Anspruch 9, wobei die Dünnsäuren ausgewählt sind aus der Gruppe, bestehend aus HNO₃, H₂SO₃ und H₂SO₄.

11. Verfahren nach einem der Ansprüche 8 bis 10, wobei die Salze ausgewählt sind aus der Gruppe, bestehend aus Nitraten, Sulfiten und Sulfaten.

12. Verfahren nach einem der vorherigen Ansprüche, wobei das Ozon einheitlich in den gesamten Querschnitt des Gasreaktors über ein Gitter eingeführt wird, oder radial eingeführt wird.

13. Verfahren nach einem der vorherigen Ansprüche, wobei der Rauchgasreaktor in Form eines Kanals vorliegt.

## Revendications

1. Procédé d'élimination de contaminants comprenant de l'oxyde d'azote (NOₓ) dans un courant de gaz d'échappement d'un procédé industriel comprenant les étapes consistant à :
a) charger un courant de gaz contenant de l'oxygène dans un générateur d'ozone, pour produire ainsi un courant de gaz contenant de l'ozone dans lequel le courant de gaz contenant de l'ozone contient 6% ou moins en poids d'ozone ;
b) envoyer ledit courant de gaz contenant de l'ozone vers une unité de séparation des gaz pour séparer l'oxygène dudit courant de gaz contenant de l'ozone, dans lequel l'étape de séparation de l'oxygène dudit courant de gaz contenant de l'ozone comprend le fait d'adsorber l'ozone du courant de gaz contenant de l'ozone sur un adsorbant et le fait de soumettre l'adsorbant à un flux de gaz vecteur de façon à désorber l'ozone dans le gaz vecteur et à former ainsi un courant de gaz vecteur contenant de l'ozone ;
c) utiliser ledit oxygène séparé pour produire davantage d'ozone, pour le procédé ;
d) charger ledit courant de gaz d'échappement provenant d'un procédé industriel dans un réacteur de gaz d'échappement ; et
e) charger le courant de gaz vecteur contenant de l'ozone dans ledit réacteur de gaz d'échappement, dans lequel l'ozone réagit avec les oxydes d'azote dans ledit courant de gaz d'échappement pour former N₂O₅, **caractérisé en ce que** le courant de gaz vecteur est un courant d'air sec ou d'azote propre, et le courant de gaz vecteur contenant de l'ozone chargé dans le réacteur de gaz d'échappement contient 6% ou moins en poids d'ozone.

2. Procédé selon la revendication 1, dans lequel le gaz d'alimentation contenant de l'oxygène est de l'air ou de l'oxygène.

3. Procédé selon la revendication 2, dans lequel l'air d'alimentation est de l'air sec comprimé.

4. Procédé selon l'une quelconque des revendications précédentes, dans lequel l'adsorbant est choisi dans le groupe constitué par le gel de silice, une zéolithe de type Y désaluminée et des mordénites à forte teneur en silice.

5. Procédé selon l'une quelconque des revendications précédentes dans lequel le gaz d'échappement est réduit en température à 163°C (325°F) ou moins en amont du réacteur de gaz d'échappement.

6. Procédé selon l'une quelconque des revendications précédentes, dans lequel le N₂O₅ est éliminé du gaz d'échappement par lavage.

7. Procédé selon la revendication 6, dans lequel le réacteur de gaz d'échappement est situé à un endroit à l'intérieur d'un laveur fonctionnant pour éliminer N₂O₅ du gaz d'échappement.

8. Procédé selon l'une quelconque des revendications précédentes, comprenant en outre les étapes consistant à :
(f) introduire un liquide réactif dans ledit réacteur de gaz d'échappement pour transformer les produits de réaction de l'ozone et lesdits contaminants en acides dilués ;
(g) adsorber lesdits acides dilués dans de l'eau liquide, afin de transformer lesdits acides dilués en sels ; et
(h) décharger dudit réacteur de gaz d'échappement ledit courant de gaz d'échappement à présent essentiellement exempt de contaminants.

9. Procédé selon la revendication 8, dans lequel ledit liquide réactif est de la soude caustique, des carbonates, des bicarbonates ou des hydroxydes de calcium, de magnésium, de potassium ou de l'ammoniac.

10. Procédé selon la revendication 8 ou la revendication 9, dans lequel lesdits acides dilués sont choisis dans le groupe constitué par HNO₃, H₂SO₃ et H₂SO₄.

11. Procédé selon l'une quelconque des revendications 8 à 10, dans lequel lesdits sels sont choisis dans le groupe constitué par les nitrates, les sulfites et les sulfates.

12. Procédé selon l'une quelconque des revendications précédentes, dans lequel ledit ozone est introduit uniformément dans toute la section transversale du réacteur à gaz par une grille, ou bien est introduit radialement.

13. Procédé selon l'une quelconque des revendications précédentes, dans lequel le réacteur de gaz d'échappement a la forme d'un conduit.
